# EUROPEAN PATENT SPECIFICATION

(11) **EP 3 907 931 B1**
(45) Date of publication and mention of the grant of the patent: **07.02.2024**
(21) Application number: 21168305.7
(22) Date of filing: 21.07.2017
(51) Int. Cl.: H04L 9/32, H04L 9/00

(54) **BLOCKCHAIN-IMPLEMENTED SYSTEM AND METHOD**
BLOCKCHAIN-IMPLEMENTIERTES SYSTEM UND VERFAHREN
PROCÉDÉ ET SYSTÈME DE MISE EN OEUVRE DE CHAÎNES DE BLOCS

(30) Priority: 29.07.2016 GB 201613174
(43) Date of publication of application: 10.11.2021
(62) Divisional of application: 17748948.1
(73) Proprietor: nChain Licensing AG, 6300 Zug (CH)
(72) Inventor: WRIGHT, Craig, Cardiff, CF10 2HH (GB); SAVANAH, Stephane, Cardiff, CF10 2HH (GB)
(74) Representative: Murgitroyd & Company

(56) References cited:
- MCCORRY PATRICK ET AL: "Towards Bitcoin Payment Networks", 30 June 2016 (2016-06-30), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 57 - 76, XP047348067, ISSN: 0302-9743 ISBN: 978-3-642-04267-6 [retrieved on 2016-06-30] * page 58, line 28 - page 59, line 32 * * page 61, line 8 - page 66, line 29 * * page 69, line 12 - page 73, line 12 *
- White Paper: "Digital Assets on Public Blockchains", , 15 March 2016 (2016-03-15), XP055384342, Retrieved from the Internet: URL:http://bitfury.com/content/5-white-pap ers-research/bitfury-digital_assets_on_pub lic_blockchains-1.pdf [retrieved on 2017-09-28]

## Description

This invention relates generally to distributed ledger technology (such as blockchain-related technologies), and in particular a solution for the secure transfer (and/or exchange) of an asset between parties. It may provide a secure peer-to-peer exchange method and/or system which is put into effect via a blockchain platform or protocol. This may or may not be the Bitcoin network. The invention is particularly suited for securely transmitting an asset, such as a digital or electronic asset, between parties where no prior relationship or trust exists.

In this document we use the term 'blockchain' for the sake of convenience and ease of reference because it is currently the most widely known term in this context. The term is used herein to include all forms of electronic, computer-based distributed ledgers, including consensus-based blockchains, alt-chains, sidechains and transaction-chain technologies, permissioned and un-permissioned ledgers, private or public ledgers, shared ledgers and variations thereof.

A blockchain is an electronic ledger which is implemented as a computer-based decentralised, distributed system made up of blocks which in turn are made up of transactions. Each transaction (Tx) includes at least one input and at least one output. Each block contains a hash of the previous block to that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations fall within the scope of the invention.

Blockchain technology is most widely known for the use of cryptocurrency implementation. However, in more recent times, digital entrepreneurs have begun exploring both the use of the cryptographic security system Bitcoin is based on, and the data that can be stored on the Blockchain, to implement new systems.

One area of current interest and research is the use of the blockchain for the implementation of "smart contracts". These are computer programs designed to automate the execution of the terms of a contract or agreement. Unlike a traditional contract which would be written in natural language, a smart contract is a machine executable program which comprises rules that can process inputs in order to produce results, which can then cause actions to be performed dependent upon those results.

Another area of blockchain-related interest is the use of 'tokens' (or 'coloured coins') to represent and transfer real-world entities via the blockchain. A potentially sensitive or secret item can be represented by the token, which has no discernable meaning or value. The token thus serves as an identifier that allows the real-world item to be referenced. MCCORRY PATRICK ET AL: "Towards Bitcoin Payment Networks", 30 June 2016 (2016-06-30), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 57 - 76, XP047348067 relates to a blockchain payment network with payment channel protocols and across several payment channels. White Paper: "Digital Assets on Public Blockchains", 15 March 2016 (2016-03-15), XP055384342 relates to digital asset management using blockchain technology.

The present invention is defined in the appended claims.

The invention may provide a computer-implemented method and corresponding system. It may be described as a method for implementing or performing an operation via a blockchain. It may be described as a method for performing an exchange or a transfer of an asset via a blockchain. One or both of the assets may be a portion of cryptocurrency. Additionally or alternatively, one or both of the assets may be non-cyrptocurrency, but may be any other kind of asset - e.g. physical or electronic or digital asset. It may be a tokenised asset.

The method may provide a computer-implemented method for controlling the transfer and/or exchange of at least one asset between a first user and a second user via a blockchain. The method may control how and when the asset(s) are transferred.

The method may comprise:
generating a first blockchain transaction comprising at least one first output, representing at least one first asset, redeemable by providing either: (i) unlocking data; or (ii) a cryptographic signature of the first user and a cryptographic signature of a second user, wherein the at least one first asset is exchanged for at least one second asset represented by at least one second output of a second blockchain transaction, the at least one second output redeemable by providing either: (i) the unlocking data; or (ii) the cryptographic signature of the first user and the cryptographic signature of the second user.

Redemption of at least one second output by providing the first unlocking data may make the first unlocking data available to redeem at least one first output.

The term "redemption" may mean spending (i.e. redeeming) an output contained within a blockchain transaction.

A mutually-assured transfer of assets via the blockchain is enabled by the above method, thereby providing the advantages of enabling secure transfer of those assets and an immutable record of the transfer to be created and maintained.

Thus, the invention may provide a mechanism whereby two parties can perform a secure exchange of assets via the blockchain even if there is no established trust between them. The invention uses cryptographic techniques, plus a time-lock mechanism which controls when mining of the transaction(s) can occur, plus the concept of "revealable" data to put this into effect. An inter-dependency between transactions is created which means that control of the asset transfers is enforced by inventive application of the blockchain protocol. Thus, the invention provides a more secure asset exchange solution for advantageous use between non-trusting parties.

Redemption of the first blockchain transaction by providing the cryptographic signature of the first user and the cryptographic signature of the second user may cause at least one first output to be returned to the first user.

This enables the first asset to be returned to the first user upon provision of both the first and second users' signatures, thereby providing the advantage of preventing loss to the first user.

The method may further comprise the step of generating a third blockchain transaction configured to enable redemption of at least one first output by providing the cryptographic signature of the first user and the cryptographic signature of the second user in response to elapse of a first locktime.

This provides a period of time within which the first user is prevented from redeeming the first output, thereby providing the advantage of preventing the first user from claiming the first output in addition to the second output within that period of time.

The third blockchain transaction may comprise an unlocking script comprising the cryptographic signature of the first user and the cryptographic signature of the second user.

This prevents third parties from claiming the first output, thereby providing the advantage of increasing the security of the method.

The step of generating the third blockchain transaction may comprise sending the third blockchain transaction in an incomplete state to the second user, the incomplete third blockchain transaction configured to receive the cryptographic signature of the second user prior to its return, in a complete state, to the first user.

This provides the advantage of providing a simple and secure mechanism for gathering the cryptographic signatures.

The first locktime may be greater than a second locktime associated with a fourth blockchain transaction, wherein the fourth blockchain transaction is configured to enable redemption of at least one second output by providing the cryptographic signature of the first user and the cryptographic signature of the second user in response to elapse of the second locktime.

This provides a buffering period of time equal to the difference between the first and second locktimes, within which the second user may redeem the first output but the first user may not submit the third blockchain transaction to the blockchain to redeem the first output, thereby disabling the first user from redeeming both the first and second outputs.

The unlocking data may comprise revealable data chosen by the first user, wherein the revealable data is unknown to the second user until redemption of the third blockchain transaction. The revealable data may be data which is (initially) secret, preferably known only to the first user, until the third blockchain transaction is spent. The revealable data may become public, or "revealed" by making it available on the blockchain by providing it in an unlocking script. This may be in order to unlock a locking script of the third transaction. The second user may then be able to see and use the revealable data and provide it to another locking script.

This provides the advantage of enabling a mutual trust to be created between the first and second users, wherein revelation of the revealable data enables the first user to redeem the second output and the second user to redeem the first output, while providing the further advantage that non-revelation of the revealable data allows the first and second users to regain their respective assets represented by the respective first and second transactions.

The unlocking data may further comprise the cryptographic signature of the second user.

This ensures that redemption of the first output requires a cryptographic signature of the second user, thereby providing the advantage of increasing the security of the method.

According to a second aspect of the present invention, there is provided a computer-implemented method for transferring an asset between a first user and a second user, the method comprising: generating a second blockchain transaction comprising at least one second output, representing at least one second asset, redeemable by providing either: (i) unlocking data; or (ii) a cryptographic signature of the first user and a cryptographic signature of a second user, wherein the at least one second asset is exchanged for at least one first asset represented by at least one first output of a first blockchain transaction, the at least one first output redeemable by providing either: (i) the first unlocking data; or (ii) the cryptographic signature of the first user and the cryptographic signature of the second user, wherein redemption of the second output by providing the first unlocking data makes the first unlocking data available to redeem the first output.

Redemption of the second blockchain transaction by providing the cryptographic signature of the first user and the cryptographic signature of the second user may cause the second output to be refunded to the second user.

This enables the second asset to be returned to the second user upon provision of both the first and second users' signatures, thereby providing the advantage of preventing loss to the second user.

The method may further comprise the step of generating a fourth blockchain transaction configured to enable redemption of at least one second output by providing the cryptographic signature of the first user and the cryptographic signature of the second user in response to elapse of a second locktime.

This provides a period of time within which the second user is prevented from redeeming the second output, thereby providing the advantage of preventing the second user from claiming the second output in addition to the first output within that period of time.

The fourth blockchain transaction may comprise an unlocking script comprising the cryptographic signature of the first user and the cryptographic signature of the second user.

The step of generating the fourth blockchain transaction may comprise sending the fourth blockchain transaction in an incomplete state to the first user, the incomplete fourth blockchain transaction configured to receive the cryptographic signature of the first user prior to its return, in a complete state, to the second user.

The method may further comprise the step of monitoring the third blockchain transaction on the blockchain.

This provides the advantage of enabling the second user to redeem the first output in a timely manner.

The method may further comprise the step of generating a fifth blockchain transaction comprising at least one third output, redeemable by providing the cryptographic signature of the first user, thereby returning at least one first output to the first user.

This enables a refund mechanism to be enacted on the blockchain, wherein the first asset is returned to the first user, thereby providing the advantage of increasing the user-friendliness of the method.

The method may further comprise the step of broadcasting the fifth blockchain transaction to the blockchain in response to a determination that the asset was not provided to the first user.

This provides the advantage of further reducing the likelihood of loss to the first user.

The fifth blockchain transaction may be sent to a third party, and the determination and broadcast may be performed by the third party.

This provides the further advantage of increasing the automation of the method.
Figure 1 shows a blockchain transaction representing a first asset from a first user to a second user in return for a second asset;
Figure 2 shows a tokenised blockchain transaction representing the second asset to be provided by a second user to a first user in return for the first asset;
Figure 3 shows a blockchain transaction configured to potentially return an output of the transaction of Figure 1 to the first user after a first locktime has elapsed;
Figure 4 shows a blockchain transaction configured to potentially return an output of the transaction of Figure 2 to the second user after a second locktime has elapsed;
Figure 5 shows a blockchain transaction representing a return of the first asset to the first user; and
Figure 6 shows a flowchart illustrating the steps taken by the first and second users.

We now provide an explanation of an embodiment of the invention, for the purpose illustration only. In this illustrative scenario, a method for transferring a second asset taking the form of event tickets in return for a first asset taking the form of payment, via the blockchain, is described. The use of the blockchain provides the inherent advantages provided by that technology. These advantages include a tamper proof record of events and increased security of currency exchange. Although this illustration relates to tickets, other types of assets may be transferred and still fall within the scope of the invention. The invention is not limited with regard to the type of asset concerned.

Alice is considering purchasing tickets for an event occurring sometime in the future. Bob is offering for sale tickets to the event in the form of tokenised blockchain transactions.

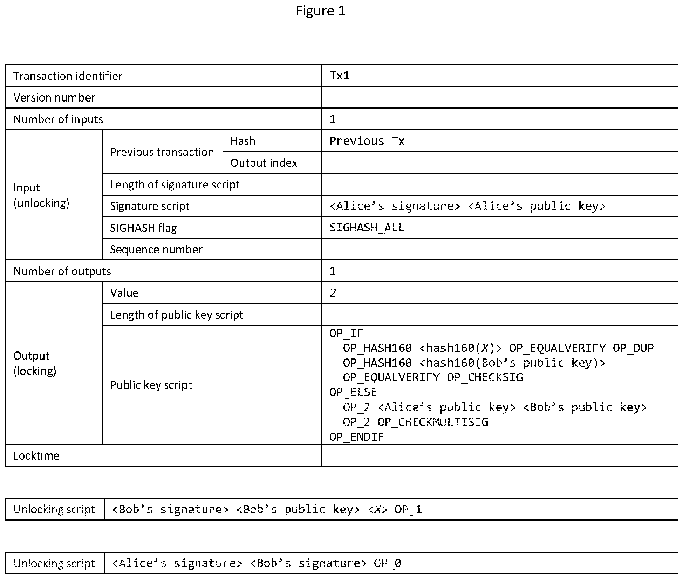

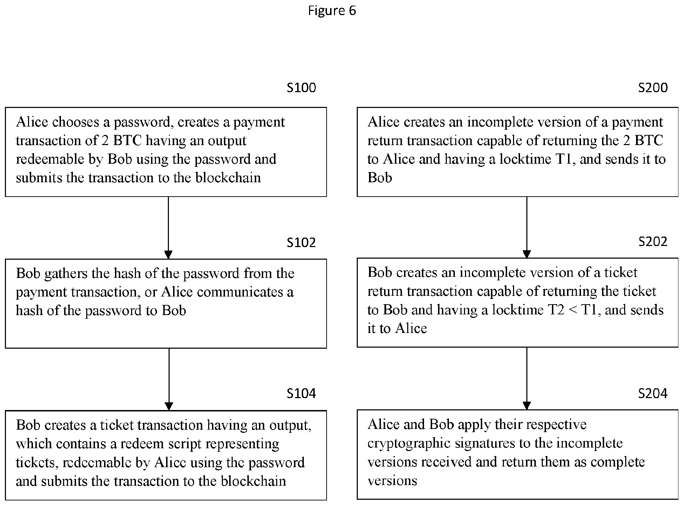

Referring to Figures 1 and 6, Alice generates a first blockchain transaction (S100) representing payment (in this illustrative embodiment, the payment is the 2 Bitcoins or 2 BTC, shown in the Value cell of Figure 1) for a number of tickets she would like to purchase from Bob. From hereon this first blockchain transaction may be referred to as a payment transaction for clarity.

The payment transaction has an output which includes the following locking script:

```
OP_IF

      OP_HASH160 <hash160(X)> OP_EQUALVERIFY OP_DUP
      OP_HASH160 <hash160(Bob's public key)>
      OP_EQUALVERIFY OP_CHECKSIG
 OP_ELSE
      OP_2 <Alice's public key> <Bob's public key>
      OP_2 OP_CHECKMULTISIG
 OP_ENDIF.
```

The payment transaction may be unlocked by presentation to the payment transaction's locking script of either of the following unlocking scripts:

```
<Bob's signature> <Bob's public key> <X> OP_1
 <Alice's signature> <Bob's signature> OP_0
```

Where X comprises data in a form useable in a blockchain transaction, chosen by Alice and used to secure the payment transaction. X may be the digitised version of biometric information, such as a fingerprint or an iris. X may contain randomly or pseudo-randomly generated data. The contents of unlocking script <Bob' s signature> <Bob's public key> <X> above, which include X, may be referred to as "unlocking data". The unlocking data may include Bob's signature and Bob's public key, or it may only include data X, or it may include any appropriate combination thereof. In this illustrative embodiment, the unlocking data contains Bob's signature, Bob's public key, and X, which is a password chosen by Alice. From hereon, X may be referred to "revealable data".

The 2 BTC may be redeemed by provision of either: Bob's cryptographic signature, Bob's public key, and X; or Alice's cryptographic signature and Bob's cryptographic signature. (Note that the first data element (OP_0, OP_1) selects which phase is being used. If the top stack value is not 0, the IF statement is executed, and the top stack value is removed.)

Alice submits the payment transaction for verification and broadcast to the blockchain. Bob may monitor the blockchain for the payment transaction, and read from the payment transaction the hash of X (S102). Alice may additionally communicate the hash of X, and/or other information about the payment transaction, to Bob by any suitable means, such as via email or text message (S102).

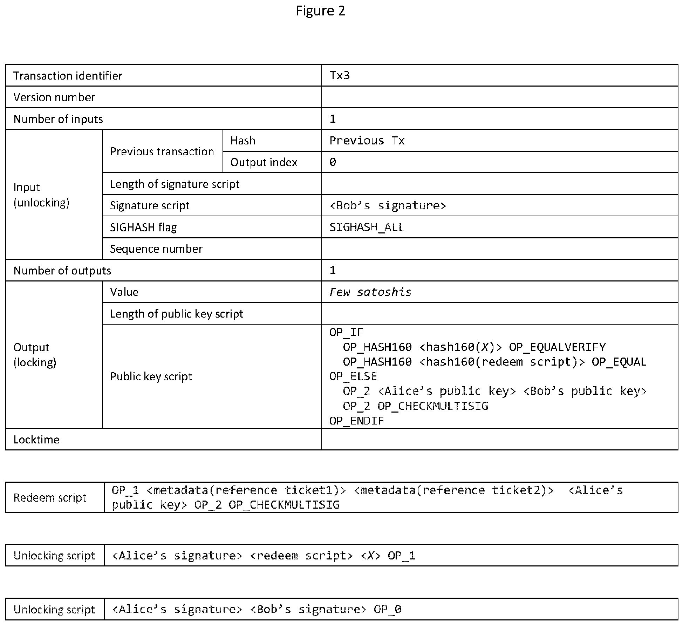

Referring to Figures 2 and 6, Bob generates a second blockchain transaction (S104), representing the tickets Alice would like to purchase, to be transferred to Alice upon payment. The number and type of tickets Alice would like to purchase may have been communicated to Bob by any appropriate means, such as via email, via an app on a mobile device or PC etc, an online store, or transaction metadata embedded in a prior blockchain transaction, before Bob generates the second blockchain transaction representing those tickets. From hereon, this second blockchain transaction may be referred to as a "ticket transaction" for clarity.

The ticket transaction has an output which includes the following locking script:

```
 OP_IF
      OP_HASH160 <hash160(X)> OP_EQUALVERIFY
      OP_HASH160 <hash160(redeem script)> OP_EQUAL
 OP_ELSE
      OP_2 <Alice's public key> <Bob's public key>
      OP_2 OP_CHECKMULTISIG
 OP_ENDIF.
```

In the above locking script, the redeem script is:

```
 OP_1 <metadata(reference ticket1)> <metadata(reference
 ticket2)> <Alice's public key> OP_2 OP_CHECKMULTISIG.
```

The ticket transaction may be unlocked by presentation to the ticket transaction's locking script of either of the following unlocking scripts:

```
 <Alice's signature> <redeem script> <X> OP_1
 <Alice's signature> <Bob's signature> OP_0
```

Where X is the password chosen by Alice, kept secret by Alice until she provides it to the locking script of the ticket transaction in order to redeem the tickets, and the redeem script is given above. In other words, the tickets may be redeemed by provision of either: Alice's cryptographic signature, the redeem script (containing Alice's public key), and X; or Alice's cryptographic signature and Bob's cryptographic signature.

Bob submits the ticket transaction for verification and broadcast to the blockchain. Alice may monitor the blockchain for the ticket transaction. Bob may additionally communicate information about the ticket transaction to Alice by any suitable means, such as via email or text message.

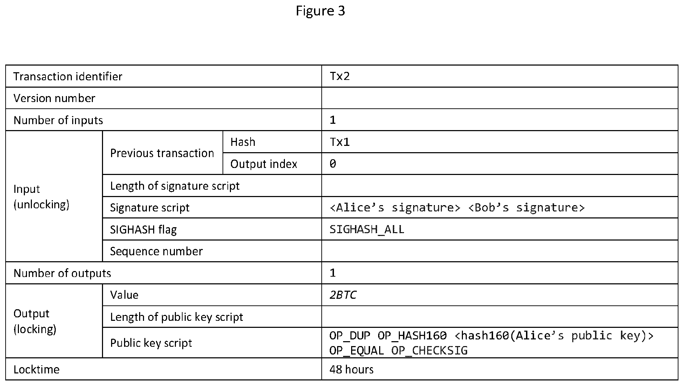

Referring to Figures 3 and 6, Alice also generates a third blockchain transaction (S200) (from hereon, this transaction may be referred to as the payment return transaction) configured to enable redemption of the 2 BTC of the payment transaction by providing to the payment transaction's locking script both Alice's signature and Bob's signature. Alice configures this transaction to have a locktime of 48 hours. This means that the transaction can be validated by the first node that receives it, and the transaction can be added to the memory pool. However, the transaction cannot be mined by miners, and therefore cannot be added to the blockchain, until the amount of time (in this illustrative example, a period of 48 hours) defined by the locktime has passed.

In order to generate the payment return transaction, Bob must provide his signature to create the transaction's unlocking script. To effect this, Alice may generate an incomplete version of the payment return transaction not containing Bob's signature and send it to Bob, who subsequently provides his signature (S204) to the incomplete transaction's locking script and returns the completed version of the payment return transaction to Alice.

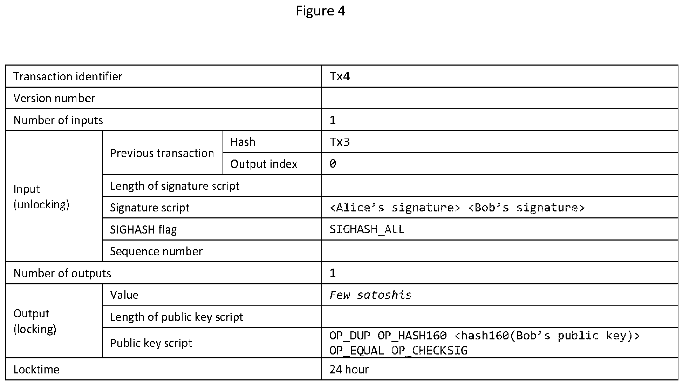

Referring to Figures 4 and 6, Bob also generates a fourth blockchain transaction (S202) (from hereon, this transaction may be referred to as the "ticket return transaction") configured to enable redemption of the tokenised output of the ticket transaction by providing to the ticket transaction's locking script both Alice's signature and Bob's signature. Bob configures this transaction to have a lock time of 24 hours. This means that the transaction can be validated by the first node that receives it, and the transaction can be added to the memory pool. However, the transaction cannot be mined by miners, and therefore cannot be added to the blockchain, until the amount of time (in this illustrative example, a period of 24 hours) defined by the locktime has passed. It is to be understood that, while the above locktimes are chosen to be 48 hours and 24 hours, any suitable locktimes may be chosen, though it is advantageous for the payment return transaction's locktime to be greater than the ticket return transaction's locktime for reasons that will be described later in the application.

In order to generate the payment return transaction, Alice must provide her signature to create the transaction's unlocking script. To effect this, Bob may generate an incomplete version of the ticket return transaction not containing Alice's signature and send it to Alice, who subsequently provides her signature (S204) to the incomplete transaction's locking script and returns the completed version of the payment return transaction to Bob.

Once the payment transaction and the ticket transaction have been added to the blockchain, Alice has the choice of providing her signature, public key, and X to the locking script of the ticket transaction in order to redeem the tickets. In so doing, Alice necessarily makes X public - X is disclosed on the blockchain as a requirement of unlocking the ticket transaction. Once Bob gains knowledge of X, Bob is able to provide his signature, his public key, and X to the locking script of the payment transaction in order to redeem payment for the tickets.

Alice has until the elapse of the ticket return transaction locktime to provide X, after which time Bob is able to provide his signature to the locking script of the ticket return transaction and have the ticket return transaction added to the blockchain, which causes Alice's signature and Bob's signature to be provided to the locking script of the ticket transaction, thereby returning the tokenised output of the ticket transaction to Bob.

Alice then may wait until the elapse of the payment return transaction locktime to provide her signature to the locking script of the payment return transaction and have the payment return transaction added to the blockchain, which causes Alice's signature and Bob's signature to be provided to the locking script of the payment transaction, thereby returning the 2 BTC of the payment transaction to Alice.

If Alice provides X before the ticket return transaction locktime elapses, Bob has until the elapse of the payment return transaction locktime to provide X to the locking script of the payment transaction to claim his 2 BTC payment for the tickets Alice has redeemed. If Bob fails to claim the 2 BTC before this locktime elapses, then once the locktime has elapsed, Alice is able to sign the payment return transaction and regain her 2 BTC.

The payment return transaction locktime is chosen to be greater than the ticket return transaction locktime to grant Bob a reasonable minimum amount of time to claim his payment from the moment Alice claims the tickets. The minimum time is equal to the difference between the two locktimes. In this illustrative example, this minimum time is therefore 24 hours.

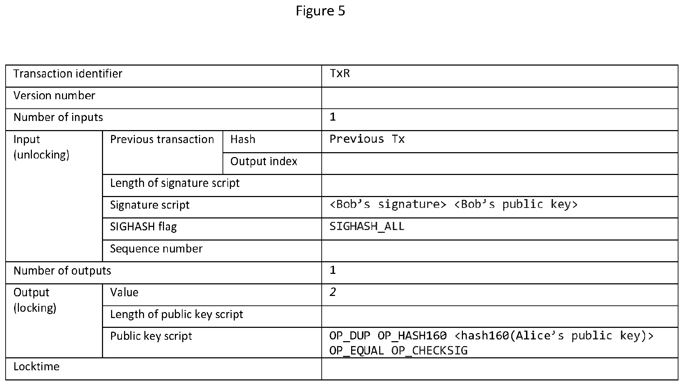

Referring to Figure 5, Bob generates a fifth blockchain transaction, hereafter referred to as a refund transaction, representing a refund of Alice's 2 BTC to Alice. Bob may do this if the event for which the tickets were purchased is cancelled, or if Alice decides she would like to return the tickets for a refund, or for any other appropriate reason. Bob sends the refund transaction to a third party, such as a third user of the blockchain or an independent service provider which provides mediation services of this type. The third party may monitor the circumstances of the exchange and/or the event, and may determine whether the event has occurred as planned or not, examples of the latter including cancellation of the event, and returns the 2 BTC to Alice upon making a determination that the event was cancelled.

The third party may be instructed or configured to execute the refund (by publishing the refund transaction to the blockchain) for any other appropriate reason. Legitimate reasons, i.e. those that would satisfy Bob and/or the third party as legitimate criteria for refunding the 2 BTC to Alice, may be stipulated in terms and conditions of the exchange, which may be communicated between Alice, Bob, and the third party prior to the exchange, the terms and conditions possibly being stored on the blockchain in the form of a tokenised contract, or stored on an internet-connected resource.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method for transferring assets between a first user and a second user via a blockchain, the method comprising:
generating a first blockchain transaction (S100) comprising at least one first output (S104), representing at least one first asset, wherein the at least one first output is locked by a locking script comprising a hash of secret data (X) chosen by the first user and is redeemable by providing unlocking data comprising the secret data chosen by the first user,
wherein the at least one first asset is exchanged for at least one second asset represented by at least one second output of a second blockchain transaction, wherein the at least one second output is locked by a locking script comprising a hash of secret data (X) chosen by the first user and the at least one second output is redeemable by providing the unlocking data comprising the secret data chosen by the first user, or a cryptographic signature of the first user and a cryptographic signature of the second user, and
wherein redemption of the at least one second output by providing the unlocking data makes the unlocking data available to the second user to redeem the at least one first output.

2. A method according to claim 1, wherein redemption of the first blockchain transaction by providing the cryptographic signature of the first user and the cryptographic signature of the second user causes at least one first output to be returned to the first user.

3. A method according to any one of the preceding claims, further comprising the step of generating a third blockchain transaction configured to enable redemption of at least one first output by providing the cryptographic signature of the first user and the cryptographic signature of the second user in response to elapse of a first locktime.

4. A method according to claim 3, wherein the third blockchain transaction comprises an unlocking script comprising the cryptographic signature of the first user and the cryptographic signature of the second user.

5. A method according to claim 4, wherein the step of generating the third blockchain transaction comprises sending the third blockchain transaction in an incomplete state to the second user, the incomplete third blockchain transaction configured to receive the cryptographic signature of the second user prior to its return, in a complete state, to the first user.

6. A method according to any one of claims 3 to 5, wherein the first locktime is greater than a second locktime associated with a fourth blockchain transaction, wherein the fourth blockchain transaction is configured to enable redemption of at least one second output by providing the cryptographic signature of the first user and the cryptographic signature of the second user in response to elapse of the second locktime.

7. A method according to any one of the preceding claims, wherein the unlocking data comprises revealable data chosen by the first user, wherein the revealable data is unknown to the second user until redemption of the third blockchain transaction.

8. A method according to claim 7, wherein the unlocking data further comprises the cryptographic signature of the second user.

9. A computer-implemented method for transferring assets between a first user and a second user, the method comprising:
generating a second blockchain transaction comprising at least one second output, representing at least one second asset, wherein the at least one second output is locked by a locking script comprising a hash of secret data (X) chosen by the first user and is redeemable by providing unlocking data comprising the secret data chosen by the first user,
wherein the at least one second asset is exchanged for at least one first asset represented by at least one first output of a first blockchain transaction, wherein the at least one first output is locked by a locking script comprising a hash of secret data (X) chosen by the first user and the at least one first output is redeemable by providing the unlocking data comprising the secret data chosen by the first user, or the cryptographic signature of the first user and the cryptographic signature of the second user,
wherein redemption of the second output by providing the unlocking data makes the unlocking data available to the second user to redeem the first output.

10. A method according to claim 9, wherein redemption of the second blockchain transaction by providing the cryptographic signature of the first user and the cryptographic signature of the second user causes the second output to be refunded to the second user.

11. A method according to any one of claims 9 to 10, further comprising the step of generating a fourth blockchain transaction configured to enable redemption of at least one second output by providing the cryptographic signature of the first user and the cryptographic signature of the second user in response to elapse of a second locktime.

12. A method according to claim 11, wherein the fourth blockchain transaction comprises an unlocking script comprising the cryptographic signature of the first user and the cryptographic signature of the second user.

13. A method according to claim 12, wherein the step of generating the fourth blockchain transaction comprises sending the fourth blockchain transaction in an incomplete state to the first user, the incomplete fourth blockchain transaction configured to receive the cryptographic signature of the first user prior to its return, in a complete state, to the second user.

14. A method according to any one of claims 9 to 13, further comprising the step of monitoring the third blockchain transaction on the blockchain.

15. A method according to any one of claims 9 to 14, further comprising the step of generating a fifth blockchain transaction comprising at least one third output, redeemable by providing the cryptographic signature of the first user, thereby returning at least one first output to the first user.

16. A method according to claim 15, further comprising the step of broadcasting the fifth blockchain transaction to the blockchain in response to a determination that the asset was not provided to the first user.

17. A method according to claim 16, wherein the fifth blockchain transaction is sent to a third party, and wherein the determination and broadcast is performed by the third party.

## Patentansprüche

1. Ein computerimplementiertes Verfahren zum Übertragen von Vermögenswerten zwischen einem ersten Benutzer und einem zweiten Benutzer über eine Blockchain, wobei das Verfahren Folgendes beinhaltet:
Erzeugen einer ersten Blockchain-Transaktion (S100), die mindestens eine erste Ausgabe beinhaltet (S104), die mindestens einen ersten Vermögenswert darstellt,
wobei die mindestens eine erste Ausgabe durch ein Sperrscript gesperrt wird, das einen Hash von geheimen Daten (X) beinhaltet, die von dem ersten Benutzer ausgewählt werden, und durch das Bereitstellen von Entsperrungsdaten, die die von dem ersten Benutzer ausgewählten geheimen Daten beinhalten, einlösbar ist,
wobei der mindestens eine erste Vermögenswert gegen mindestens einen zweiten Vermögenswert ausgetauscht wird, der durch mindestens eine zweite Ausgabe einer zweiten Blockchain-Transaktion dargestellt wird, wobei die mindestens eine zweite Ausgabe durch ein Sperrscript gesperrt wird, das einen Hash von geheimen Daten (X) beinhaltet, die von dem ersten Benutzer ausgewählt werden, und die mindestens eine zweite Ausgabe durch das Bereitstellen der Entsperrungsdaten, die die von dem ersten Benutzer ausgewählten geheimen Daten beinhalten, oder einer kryptografischen Signatur des ersten Benutzers und einer kryptografischen Signatur des zweiten Benutzers einlösbar ist, und
wobei die Einlösung der mindestens einen zweiten Ausgabe durch das Bereitstellen der Entsperrungsdaten die Entsperrungsdaten für den zweiten Benutzer verfügbar macht, um die mindestens eine erste Ausgabe einzulösen.

2. Verfahren gemäß Anspruch 1, wobei die Einlösung der ersten Blockchain-Transaktion durch das Bereitstellen der kryptografischen Signatur des ersten Benutzers und der kryptografischen Signatur des zweiten Benutzers die Rückgabe mindestens einer ersten Ausgabe an den ersten Benutzer bewirkt.

3. Verfahren gemäß einem der vorhergehenden Ansprüche, das ferner den Schritt des Erzeugens einer dritten Blockchain-Transaktion beinhaltet, die so konfiguriert ist, dass sie die Einlösung mindestens einer ersten Ausgabe durch das Bereitstellen der kryptografischen Signatur des ersten Benutzers und der kryptografischen Signatur des zweiten Benutzers als Reaktion auf den Ablauf einer ersten Sperrzeit ermöglicht.

4. Verfahren gemäß Anspruch 3, wobei die dritte Blockchain-Transaktion ein Entsperrungsscript beinhaltet, das die kryptografische Signatur des ersten Benutzers und die kryptografische Signatur des zweiten Benutzers beinhaltet.

5. Verfahren gemäß Anspruch 4, wobei der Schritt des Erzeugens der dritten Blockchain-Transaktion das Senden der dritten Blockchain-Transaktion in einem unvollständigen Zustand an den zweiten Benutzer beinhaltet, wobei die unvollständige dritte Blockchain-Transaktion so konfiguriert ist, dass sie die kryptografische Signatur des zweiten Benutzers vor ihrer Rückgabe in einem vollständigen Zustand an den ersten Benutzer empfängt.

6. Verfahren gemäß einem der Ansprüche 3 bis 5, wobei die erste Sperrzeit länger ist als eine zweite Sperrzeit, die mit einer vierten Blockchain-Transaktion assoziiert ist, wobei die vierte Blockchain-Transaktion so konfiguriert ist, dass sie die Einlösung mindestens einer zweiten Ausgabe ermöglicht, indem sie die kryptografische Signatur des ersten Benutzers und die kryptografische Signatur des zweiten Benutzers als Reaktion auf den Ablauf der zweiten Sperrzeit bereitstellt.

7. Verfahren gemäß einem der vorhergehenden Ansprüche, wobei die Entsperrungsdaten aufdeckbare Daten beinhalten, die von dem ersten Benutzer ausgewählt werden, wobei die aufdeckbaren Daten dem zweiten Benutzer bis zur Einlösung der dritten Blockchain-Transaktion unbekannt sind.

8. Verfahren gemäß Anspruch 7, wobei die Entsperrungsdaten ferner die kryptografische Signatur des zweiten Benutzers beinhalten.

9. Ein computerimplementiertes Verfahren zum Übertragen von Vermögenswerten zwischen einem ersten Benutzer und einem zweiten Benutzer, wobei das Verfahren Folgendes beinhaltet:
Erzeugen einer zweiten Blockchain-Transaktion, die mindestens eine zweite Ausgabe beinhaltet, die mindestens einen zweiten Vermögenswert darstellt, wobei die mindestens eine zweite Ausgabe durch ein Sperrscript gesperrt wird, das einen Hash von geheimen Daten (X) beinhaltet, die von dem ersten Benutzer ausgewählt werden, und durch das Bereitstellen von Entsperrungsdaten, die die von dem ersten Benutzer ausgewählten geheimen Daten beinhalten, einlösbar ist,
wobei der mindestens eine zweite Vermögenswert gegen mindestens einen ersten Vermögenswert ausgetauscht wird, der durch mindestens eine erste Ausgabe einer erste Blockchain-Transaktion dargestellt wird, wobei die mindestens eine erste Ausgabe durch ein Sperrscript gesperrt wird, das einen Hash von geheimen Daten (X) beinhaltet, die von dem ersten Benutzer ausgewählt werden, und die mindestens eine erste Ausgabe durch das Bereitstellen der Entsperrungsdaten, die die von dem ersten Benutzer ausgewählten geheimen Daten beinhalten, oder der kryptografischen Signatur des ersten Benutzers und der kryptografischen Signatur des zweiten Benutzers einlösbar ist,
wobei die Einlösung der zweiten Ausgabe durch das Bereitstellen der Entsperrungsdaten die Entsperrungsdaten für den zweiten Benutzer verfügbar macht, um die erste Ausgabe einzulösen.

10. Verfahren gemäß Anspruch 9, wobei die Einlösung der zweiten Blockchain-Transaktion durch das Bereitstellen der kryptografischen Signatur des ersten Benutzers und der kryptografischen Signatur des zweiten Benutzers die Rückerstattung der zweiten Ausgabe an den zweiten Benutzer bewirkt.

11. Verfahren gemäß einem der Ansprüche 9 bis 10, das ferner den Schritt des Erzeugens einer vierten Blockchain-Transaktion beinhaltet, die so konfiguriert ist, dass sie die Einlösung mindestens einer zweiten Ausgabe durch das Bereitstellen der kryptografischen Signatur des ersten Benutzers und der kryptografischen Signatur des zweiten Benutzers als Reaktion auf den Ablauf einer zweiten Sperrzeit ermöglicht.

12. Verfahren gemäß Anspruch 11, wobei die vierte Blockchain-Transaktion ein Entsperrungsscript beinhaltet, das die kryptografische Signatur des ersten Benutzers und die kryptografische Signatur des zweiten Benutzers beinhaltet.

13. Verfahren gemäß Anspruch 12, wobei der Schritt des Erzeugens der vierten Blockchain-Transaktion das Senden der vierten Blockchain-Transaktion in einem unvollständigen Zustand an den ersten Benutzer beinhaltet, wobei die unvollständige vierte Blockchain-Transaktion so konfiguriert ist, dass sie die kryptografische Signatur des ersten Benutzers vor ihrer Rückgabe in einem vollständigen Zustand an den zweiten Benutzer empfängt.

14. Verfahren gemäß einem der Ansprüche 9 bis 13, das ferner den Schritt des Überwachens der dritten Blockchain-Transaktion auf der Blockchain beinhaltet.

15. Verfahren gemäß einem der Ansprüche 9 bis 14, das ferner den Schritt des Erzeugens einer fünften Blockchain-Transaktion beinhaltet, die mindestens eine dritte Ausgabe beinhaltet, die durch das Bereitstellen der kryptografischen Signatur des ersten Benutzers einlösbar ist, wodurch mindestens eine erste Ausgabe an den ersten Benutzer zurückgegeben wird.

16. Verfahren gemäß Anspruch 15, das ferner den Schritt des Rundsendens der fünften Blockchain-Transaktion an die Blockchain als Reaktion auf eine Bestimmung, dass der Vermögenswert dem ersten Benutzer nicht bereitgestellt wurde, beinhaltet.

17. Verfahren gemäß Anspruch 16, wobei die fünfte Blockchain-Transaktion an Dritte gesendet wird und wobei die Bestimmung und das Rundsenden von Dritten durchgeführt werden.

## Revendications

1. Un procédé mis en oeuvre par ordinateur pour transférer des actifs entre un premier utilisateur et un deuxième utilisateur par le biais d'une chaîne de blocs, le procédé comprenant :
la génération d'une première transaction par chaîne de blocs (S100) comprenant au moins une première sortie (S104), représentant au moins un premier actif, où l'au moins une première sortie est verrouillée par un script de verrouillage comprenant une valeur de hachage de données secrètes (X) choisies par le premier utilisateur et est rachetable en fournissant des données de déverrouillage comprenant les données secrètes choisies par le premier utilisateur,
où l'au moins un premier actif est échangé contre au moins un deuxième actif représenté par au moins une deuxième sortie d'une deuxième transaction par chaîne de blocs, où l'au moins une deuxième sortie est verrouillée par un script de verrouillage comprenant une valeur de hachage de données secrètes (X) choisies par le premier utilisateur et l'au moins une deuxième sortie est rachetable en fournissant les données de déverrouillage comprenant les données secrètes choisies par le premier utilisateur, ou une signature cryptographique du premier utilisateur et une signature cryptographique du deuxième utilisateur, et
où le rachat de l'au moins une deuxième sortie en fournissant les données de déverrouillage rend les données de déverrouillage accessibles au deuxième utilisateur pour racheter l'au moins une première sortie.

2. Un procédé selon la revendication 1, où le rachat de la première transaction par chaîne de blocs en fournissant la signature cryptographique du premier utilisateur et la signature cryptographique du deuxième utilisateur entraîne le renvoi d'au moins une première sortie au premier utilisateur.

3. Un procédé selon l'une quelconque des revendications précédentes, comprenant en outre l'étape de génération d'une troisième transaction par chaîne de blocs configurée pour permettre le rachat d'au moins une première sortie en fournissant la signature cryptographique du premier utilisateur et la signature cryptographique du deuxième utilisateur en réponse à l'écoulement d'un premier temps de verrouillage.

4. Un procédé selon la revendication 3, où la troisième transaction par chaîne de blocs comprend un script de déverrouillage comprenant la signature cryptographique du premier utilisateur et la signature cryptographique du deuxième utilisateur.

5. Un procédé selon la revendication 4, où l'étape de génération de la troisième transaction par chaîne de blocs comprend l'envoi de la troisième transaction par chaîne de blocs dans un état incomplet au deuxième utilisateur, la troisième transaction par chaîne de blocs incomplète étant configurée pour recevoir la signature cryptographique du deuxième utilisateur préalablement à son renvoi, dans un état complet, au premier utilisateur.

6. Un procédé selon n'importe laquelle des revendications 3 à 5, où le premier temps de verrouillage est supérieur à un deuxième temps de verrouillage associé à une quatrième transaction par chaîne de blocs, où la quatrième transaction par chaîne de blocs est configurée pour permettre le rachat d'au moins une deuxième sortie en fournissant la signature cryptographique du premier utilisateur et la signature cryptographique du deuxième utilisateur en réponse à l'écoulement du deuxième temps de verrouillage.

7. Un procédé selon n'importe laquelle des revendications précédentes, où les données de déverrouillage comprennent des données révélables choisies par le premier utilisateur, où les données révélables ne sont pas connues du deuxième utilisateur jusqu'au rachat de la troisième transaction par chaîne de blocs.

8. Un procédé selon la revendication 7, où les données de déverrouillage comprennent en outre la signature cryptographique du deuxième utilisateur.

9. Un procédé mis en oeuvre par ordinateur pour transférer des actifs entre un premier utilisateur et un deuxième utilisateur, le procédé comprenant :
la génération d'une deuxième transaction par chaîne de blocs comprenant au moins une deuxième sortie, représentant au moins un deuxième actif, où l'au moins une deuxième sortie est verrouillée par un script de verrouillage comprenant une valeur de hachage de données secrètes (X) choisies par le premier utilisateur et est rachetable en fournissant des données de déverrouillage comprenant les données secrètes choisies par le premier utilisateur,
où l'au moins un deuxième actif est échangé contre au moins un premier actif représenté par au moins une première sortie d'une première transaction par chaîne de blocs, où l'au moins une première sortie est verrouillée par un script de verrouillage comprenant une valeur de hachage de données secrètes (X) choisies par le premier utilisateur et l'au moins une première sortie est rachetable en fournissant les données de déverrouillage comprenant les données secrètes choisies par le premier utilisateur, ou la signature cryptographique du premier utilisateur et la signature cryptographique du deuxième utilisateur,
où le rachat de la deuxième sortie en fournissant les données de déverrouillage rend les données de déverrouillage accessibles au deuxième utilisateur pour racheter la première sortie.

10. Un procédé selon la revendication 9, où le rachat de la deuxième transaction par chaîne de blocs en fournissant la signature cryptographique du premier utilisateur et la signature cryptographique du deuxième utilisateur entraîne le remboursement de la deuxième sortie au deuxième utilisateur.

11. Un procédé selon n'importe laquelle des revendications 9 à 10, comprenant en outre l'étape de génération d'une quatrième transaction par chaîne de blocs configurée pour permettre le rachat d'au moins une deuxième sortie en fournissant la signature cryptographique du premier utilisateur et la signature cryptographique du deuxième utilisateur en réponse à l'écoulement d'un deuxième temps de verrouillage.

12. Un procédé selon la revendication 11, où la quatrième transaction par chaîne de blocs comprend un script de déverrouillage comprenant la signature cryptographique du premier utilisateur et la signature cryptographique du deuxième utilisateur.

13. Un procédé selon la revendication 12, où l'étape de génération de la quatrième transaction par chaîne de blocs comprend l'envoi de la quatrième transaction par chaîne de blocs dans un état incomplet au premier utilisateur, la quatrième transaction par chaîne de blocs incomplète étant configurée pour recevoir la signature cryptographique du premier utilisateur préalablement à son renvoi, dans un état complet, au deuxième utilisateur.

14. Un procédé selon n'importe laquelle des revendications 9 à 13, comprenant en outre l'étape de surveillance de la troisième transaction par chaîne de blocs sur la chaîne de blocs.

15. Un procédé selon n'importe laquelle des revendications 9 à 14, comprenant en outre l'étape de génération d'une cinquième transaction par chaîne de blocs comprenant au moins une troisième sortie, rachetable en fournissant la signature cryptographique du premier utilisateur, renvoyant de ce fait au moins une première sortie au premier utilisateur.

16. Un procédé selon la revendication 15, comprenant en outre l'étape de diffusion de la cinquième transaction par chaîne de blocs à la chaîne de blocs en réponse à une détermination que l'actif n'a pas été fourni au premier utilisateur.

17. Un procédé selon la revendication 16, où la cinquième transaction par chaîne de blocs est envoyée à un tiers, et où la détermination et la diffusion sont réalisées par le tiers.
